# EUROPEAN PATENT APPLICATION

(11) **EP 4 835 617 A1**
(43) Date of publication of application: **04.11.2026**
(21) Application number: 24909519.1
(22) Date of filing: 23.05.2024
(51) Int. Cl.: G06F 3/01, G06F 9/50, G06F 13/40

(54) **HUMAN-COMPUTER INTERACTION SYSTEM AND METHOD WITH BIDIRECTIONAL COMMUNICATION**

(30) Priority: 28.12.2023 CN 202311835856
(71) Applicant: Jiangsu Nanomeida Optoelectronics Technology Co., Ltd., Suzhou, Jiangsu 215000 (CN)
(72) Inventor: SU, Yanping, Suzhou, Jiangsu 215000 (CN); BIAN, Weijun, Suzhou, Jiangsu 215000 (CN); LIU, Tengjiao, Suzhou, Jiangsu 215000 (CN); HOU, Haiping, Suzhou, Jiangsu 215000 (CN); FAN, Jiangfeng, Suzhou, Jiangsu 215000 (CN)
(74) Representative: Bryn Aarflot AS
(86) International application number: PCT/CN2024/094906
(87) International publication number: WO 2025/138552

(57) **Abstract**

Disclosed in the present disclosure are a human-computer interaction system and method with bidirectional communication. The system comprises a human-computer interaction apparatus and a computing apparatus which are physically separated. The human-computer interaction apparatus is used for receiving and displaying applications to which permissions are allocated by the computing apparatus, operating the computing apparatus on the basis of permissions, receiving a human-computer interaction command, transmitting same to the computing apparatus and receiving and displaying a processing result returned by the computing apparatus. The computing apparatus is used for allocating the permissions of the human-computer interaction apparatus, carrying out computational processing and software operations and returning the processing result to the human-computer interaction apparatus. Combination forms of the system comprise one human-computer interaction apparatus and one computing apparatus, a plurality of human-computer interaction apparatuses and one computing apparatus, one human-computer interaction apparatus and a plurality of computing apparatuses, or a plurality of human-computer interaction apparatuses and a plurality of computing apparatuses. The present invention avoids the need of binding computing terminals and human-computer interaction terminals within constrained spaces, expands interaction modes and enables effective separation between computing and interaction, thus reducing waste of computing power and reducing the cost.

## Description

### TECHNICAL FIELD

The present invention relates to the technical field of touch-display communication, in particular to a human-computer interaction system and method with bidirectional communication.

### BACKGROUND

Currently, most multi-screen interactions on the market essentially involve projecting the operation interface of a computing apparatus onto a receiving screen, with operations being performed through the computing apparatus. However, it is impossible to operate on the receiving screen and synchronously return the screen content. Chinese patent application publication No. CN 114647390 A discloses an enhanced screen sharing method and system, and electronic devices. During screen sharing between electronic devices, a receiving device in screen sharing can receive more types of operations performed by a user on a shared interface of the screen sharing. However, all electronic devices act as computing apparatuses, and this approach is only applicable to screen sharing between two devices, which has significant limitations for scenarios requiring multi-screen sharing, and also results in considerable computing power waste. Chinese patent application publication No. CN 114356266 A discloses an interaction method and apparatus, and an electronic device. In a screen sharing application, a shared terminal does not necessarily have to follow the sharing progress of a sharing terminal, but can browse based on its own needs the content of a shared file that has not yet been shared or the content that has been previously shared. However, the sharing process is only limited to a single application, and switching back and forth between applications is required when sharing other applications, thereby making the operation cumbersome. Chinese patent application publication No. CN 104796315 A discloses a resource sharing processing method and apparatus, which can achieve screen sharing, and a sharing receiving terminal can also effectively control shared resources. However, the sharing receiving terminal cannot fully control a host. Chinese patent application publication No. CN 106354505 A discloses a method for operating a screen obtained via sharing, wherein a shared screen can be remotely controlled, and the shared screen can also control the screen of the original sharing device. However, this method is only applicable to screen sharing between two terminal devices and does not support multi-device sharing. Chinese patent application publication No. CN 116708885 A discloses a screen projection method, a projection device, a connection device, a projected device, and a storage medium. A one-to-one, one-to-many or many-to-many relationship may be established between the projection device and the projected device. However, the projection device cannot operate on the projected information and return the result to the projected device. Chinese patent application publication No. CN 116800799 A discloses an intelligent interaction system between a vehicle head unit and a mobile terminal. The mobile terminal can control the vehicle head unit to realize the functions of the vehicle head unit, and the vehicle head unit can also synchronously control the mobile terminal. However, this system is only limited to intelligent interaction between the mobile terminal and the vehicle head unit, and does not support multi-device sharing.

### SUMMARY OF THE INVENTION

An object of the present invention is to overcome the defects of the prior art, and provide a human-computer interaction system and method with bidirectional communication.

In order to achieve the above object, the present invention provides a human-computer interaction system with bidirectional communication, and the system includes a human-computer interaction apparatus and a computing apparatus which are physically separated, wherein
the human-computer interaction apparatus is configured to receive and display applications to which permissions are allocated by the computing apparatus, operate the computing apparatus on the basis of the permissions, receive a human-computer interaction command, transmit the human-computer interaction command to the computing apparatus, and receive and display a processing result returned by the computing apparatus;
the computing apparatus is configured to allocate the permissions to the human-computer interaction apparatus, perform computational processing and software operations, and return the processing result to the human-computer interaction apparatus;
and combination forms of the system include one human-computer interaction apparatus and one computing apparatus, a plurality of human-computer interaction apparatuses and one computing apparatus, one human-computer interaction apparatus and a plurality of computing apparatuses, or a plurality of human-computer interaction apparatuses and a plurality of computing apparatuses.

Preferably, the human-computer interaction apparatus includes a communication module, a display module, and a human-computer interaction module, wherein
the communication module is configured to perform bidirectional communication with the computing apparatus, receive the permissions allocated by the computing apparatus and transmit the permissions to the display module, send commands and/or requests to the computing apparatus, receive the processing result returned by the computing apparatus, and transmit the processing result to the display module;
the display module is configured to display the applications to which permissions are allocated by the computing apparatus, and is further configured to display the returned processing result; and
the human-computer interaction module is configured to receive the human-computer interaction command using a human-computer interaction technology.

Preferably, the human-computer interaction technology includes one or more of resistive touch, capacitive touch, electromagnetic touch, infrared touch, surface acoustic wave touch, visual recognition, voice recognition, LiDAR, mouse, keyboard, touchpad, stylus input, 3D touch, and gravity sensing.

Preferably, the technology employed by the display module includes one or more of liquid crystal display, OLED display, e-ink display, mini-LED display, micro-LED display, holographic imaging display, and full-band display.

Preferably, the requests sent by the communication module of the human-computer interaction apparatus to the computing apparatus include: a communication connection request, and a request to pause or disconnect a connection with the computing apparatus.

Preferably, the computing apparatus employs a multi-threaded parallel working mode, and the computing apparatus includes: a communication module, a processing module, and a permission control module; wherein
the communication module is configured to perform bidirectional communication with the human-computer interaction apparatus, transmit open applications to the human-computer interaction apparatus, receive commands and/or requests from the human-computer interaction apparatus, and return a processing result to the human-computer interaction apparatus;
the processing module is configured to perform computational processing and software operations according to instructions of the human-computer interaction apparatus, and transmit the processing result to the communication module; and
the permission control module is configured to allocate the permissions to the human-computer interaction apparatus, wherein the permissions include opening access to partial applications and all applications.

Preferably, the communication module of the computing apparatus is further configured to pause or disconnect a communication connection with the human-computer interaction apparatus, and is further configured to receive a request sent by the human-computer interaction apparatus to pause or disconnect a connection with the computing apparatus, and decide whether to approve the request.

Preferably, a communication mode between the human-computer interaction apparatus and the computing apparatus is a wired or wireless mode, and the wireless mode includes one or more of WiFi, Bluetooth, Zigbee, NB-IoT, and LoRa.

In another aspect, the present invention provides a human-computer interaction method with bidirectional communication, implemented by the above system, wherein
when the system includes one human-computer interaction apparatus and one computing apparatus, the method includes:
initiating, by the human-computer interaction apparatus, a connection request to the computing apparatus by means of a communication identification code;
accepting, by the computing apparatus, the connection request and establishing a connection;
allocating, by the computing apparatus, permissions to the human-computer interaction apparatus;
displaying, by the human-computer interaction apparatus, applications to which permissions are allocated by the computing apparatus;
operating, by the human-computer interaction apparatus, the computing apparatus on the basis of the permissions, receiving a human-computer interaction command and/or request, and transmitting the human-computer interaction command and/or request to the computing apparatus;
performing, by the computing apparatus, computational processing and software operations, and returning the processing result to the human-computer interaction apparatus; and
displaying, by the human-computer interaction apparatus, the processing result;
when the system includes a plurality of human-computer interaction apparatuses and one computing apparatus, the method includes:
   initiating, by the plurality of human-computer interaction apparatuses, connection requests to the computing apparatus respectively by means of communication identification codes;
   determining, by the computing apparatus, the human-computer interaction apparatuses to be admitted for connection, and establishing connections respectively;
   allocating, by the computing apparatus, permissions to each connected human-computer interaction apparatus;
   displaying, by each connected human-computer interaction apparatus, an application to which permissions are allocated by the computing apparatus;
   operating, by each connected human-computer interaction apparatus, the computing apparatus according to respective permissions of the human-computer interaction apparatus, receiving human-computer interaction commands and/or requests respectively, and transmitting the commands and/or requests to the computing apparatus;
   performing, by the computing apparatus, computational processing and software operations, and returning the processing result to the corresponding connected human-computer interaction apparatuses; and
   displaying, by the human-computer interaction apparatus, the processing result;
   when the system includes one human-computer interaction apparatus and a plurality of computing apparatuses, the method includes:
      initiating, by the plurality of computing apparatuses, connection requests to the human-computer interaction apparatus respectively by means of communication identification codes;
      accepting, by the human-computer interaction apparatus, the connection requests and establishing connections;
      allocating, by each connected computing apparatus, permissions to the human-computer interaction apparatus;
      displaying, by the human-computer interaction apparatus, applications to which permissions are allocated by different computing apparatuses in a split-screen manner;
      operating, by the human-computer interaction apparatus, the computing apparatuses according to the permissions, and transmitting human-computer interaction commands and/or requests to corresponding computing apparatuses;
      performing, by each connected computing apparatus, computational processing and software operations, and returning a processing result to the human-computer interaction apparatus; and
      displaying, by the human-computer interaction apparatus, the processing results of different computing apparatuses in a split-screen manner;
      when the system includes a plurality of human-computer interaction apparatuses and a plurality of computing apparatuses, the method includes:
         initiating, by the plurality of human-computer interaction apparatuses, connection requests to the plurality of computing apparatuses respectively by means of communication identification codes;
         accepting, by each computing apparatus, corresponding connection requests and establishing connections;
         allocating, by each computing apparatus, permissions to the connected human-computer interaction apparatuses;
         displaying, by each connected human-computer interaction apparatus, applications to which permissions are allocated by different computing apparatuses in a split-screen manner;
         operating, by each connected human-computer interaction apparatus, the computing apparatuses according to the permissions, and transmitting human-computer interaction commands and/or requests to the corresponding computing apparatuses;
         performing, by each computing apparatus, computational processing and software operations, and returning processing results to the connected human-computer interaction apparatus; and
         displaying, by each connected human-computer interaction apparatus, the processing results from different computing apparatuses in a split-screen manner.

Preferably, the method further includes:
directly pausing or disconnecting, by the computing apparatus, a connection with the human-computer interaction apparatus; or
receiving, by the computing apparatus, a pausing or disconnection request sent by the human-computer interaction apparatus, and deciding whether to approve the request.

Compared with the prior art, the present invention has the following advantages:
In the present invention, the human-computer interaction apparatus is physically separated from the computing apparatus, and the human-computer interaction apparatus can be connected to the computing apparatus by means of wireless or wired communication. In the method for implementing bidirectional communication between the human-computer interaction apparatus and the computing apparatus, the human-computer interaction apparatus and the computing apparatus establish a communication connection through a communication protocol, wherein the computing apparatus can allocate permissions to the human-computer interaction apparatus, and interaction information of the human-computer interaction apparatus can be transmitted to the computing apparatus for computational processing and software operations. Data results from the computing apparatus are returned to the human-computer interaction apparatus. The method is applicable to communication modes such as one-to-one, one-to-many, many-to-one, and many-to-many. The present invention eliminates the need for the computing terminal to be bound to the human-computer interaction terminal within a limited space, expands interaction modes, achieves effective separation of computing power from interaction, reduces computing power waste, and lowers costs.

### BRIEF DESCRIPTION OF THE DRAWINGS

Fig. 1 is a schematic diagram of a human-computer interaction apparatus according to Embodiment 1 of the present invention, wherein a, b, c, and d are a front view, a left view, a right view, and a rear view, respectively.
Fig. 2 is a schematic diagram of a preferred nano silver wire touch display module of the human-computer interaction apparatus according to Embodiment 2 of the present invention.
Fig. 3 is a flowchart of a method for implementing one-to-one bidirectional communication between a human-computer interaction apparatus and a computing apparatus according to Embodiment 3 of the present invention.
Fig. 4 is a flowchart of a method for implementing one-to-many bidirectional communication between a human-computer interaction apparatus and a computing apparatus according to Embodiment 4 of the present invention.
Fig. 5 is a flowchart of a method for implementing many-to-one bidirectional communication between a human-computer interaction apparatus and a computing apparatus according to Embodiment 5 of the present invention.
Fig. 6 is a flowchart of a method for implementing many-to-many bidirectional communication between a human-computer interaction apparatus and a computing apparatus according to Embodiment 6 of the present invention.

### Reference numerals in the figures:

1. sound outlet; 2. USB port for wired connection to a mobile phone;
3. headphone jack; 4. Type-C port;
5. volume adjustment button; 6. power on/off button;
7. backside frosted nano silver wire conductive film; 8. OCA
9. nano silver wire conductive film; 10. display module.

### DETAILED DESCRIPTION

The present invention provides a human-computer interaction system and method with bidirectional communication. The human-computer interaction apparatus is physically separated from the computing apparatus, and the human-computer interaction apparatus can be connected to the computing apparatus by means of wireless or wired communication. The computing terminal is not required to be bound to the interaction terminal within a limited space, so as to expand interactive modes, reduce computing power waste and lower costs. Interaction information of the human-computer interaction apparatus can be transmitted to the computing apparatus for computational processing and software operations, and a processing result of the computing apparatus is returned to the human-computer interaction apparatus. The human-computer interaction system and method are applicable to communication modes such as one-to-one, one-to-many, many-to-one, and many-to-many.

Preferably, the communication mode is a wireless communication mode. Optionally, another communication mode between the human-computer interaction apparatus and the computing apparatus is a wired communication mode, which supports a common data cable interface and can optionally charge the computing apparatus while being connected to the computing apparatus.

The human-computer interaction apparatus includes a communication module, a display module, and a human-computer interaction module.

The functions that can be executed by the communication module include but are not limited to wireless communication, wired communication, optical communication or other communication modes. The technical forms of wireless communication include, but are not limited to, WiFi, Bluetooth, Zigbee, NB-IoT, and LoRa.

The display technologies employed by the display module include, but are not limited to, liquid crystal display, OLED display, e-ink display, mini-LED display, micro-LED display, holographic imaging display, and full-band display.

The human-computer interaction technologies employed by the human-computer interaction module include, but are not limited to, resistive touch, capacitive touch, electromagnetic touch, infrared touch, surface acoustic wave touch, visual recognition, voice recognition, LiDAR, mouse, keyboard, touchpad, stylus input, 3D touch, and gravity sensing.

Optionally, the human-computer interaction apparatus further includes, but is not limited to, a lithium battery power supply configured to support Type-C port charging, a microphone and a speaker, a stylus input, a soft keyboard, and a camera.

Capacitive touch includes, but is not limited to, ITO conductive film capacitive touch, nano silver wire conductive film capacitive touch, metal mesh conductive film capacitive touch, and carbon nanotube conductive film capacitive touch, preferably, nano silver wire conductive film capacitive touch. Preferably, the nano silver wire capacitive touch screen is a coverless rigid-flexible ultra-thin touch screen made of nano silver wire. The surface of the touch screen is a frosted surface, which has the advantages of being scratch-resistant, fingerprint-resistant, and anti-reflective, and achieves a "paper-like" touch experience. The coverless nano silver wire ultra-thin rigid-flexible touch screen is employed to eliminate the need for one layer of OCA and one layer of cover plate, thereby not only reducing costs, but also achieving weight reduction and thickness reduction of the high-speed bidirectional screen projection PAD.

The computing apparatus includes: a communication module, a display module, and a human-computer interaction module, wherein
the communication module is configured to perform bidirectional communication with the human-computer interaction apparatus, transmit open applications to the human-computer interaction apparatus, receive commands and/or requests from the human-computer interaction apparatus, and return a processing result to the human-computer interaction apparatus;
the processing module is configured to perform computational processing and software operations according to instructions of the human-computer interaction apparatus, and transmit the processing result to the communication module; and
the permission control module is configured to allocate the permissions to the human-computer interaction apparatus, wherein the permissions include opening access to partial applications and all applications. When the system includes one human-computer interaction apparatusand one computing apparatus, the permission control module is further configured to set the priorities of applications permitted to be operated by the human-computer interaction apparatus; when the system includes a plurality of human-computer interaction apparatuses and one computing apparatus, the permission control module is further configured to set the priorities of different connected human-computer interaction apparatuses and the priorities of applications permitted to be operated by the human-computer interaction apparatuses; when the system includes one human-computer interaction apparatus and a plurality of computing apparatuses, the permission control module is further configured to set the priorities of the different computing apparatuses and the priorities of applications permitted to be operated by the human-computer interaction apparatus; when the system includes a plurality of human-computer interaction apparatuses and a plurality of computing apparatuses, the permission control module is further configured to set the priorities of the different connected human-computer interaction apparatuses, the priorities of the computing apparatuses connected to each human-computer interaction apparatus, and the priorities of applications permitted to be operated by the human-computer interaction apparatus.

The computing apparatus includes, but is not limited to, a memory, a processor, a communication module, and a human-computer interaction module.

A method for implementing bidirectional communication between a human-computer interaction apparatus and a computing apparatus is provided, characterized in that one of the human-computer interaction apparatus or the computing apparatus initiates a connection request by means of a communication identification code, the other party accepts the connection request, and establishes a communication connection through a communication protocol. The interaction information from the human-computer interaction apparatus can be transmitted to the computing apparatus for computational processing and software operations, and data results from the computing apparatus are returned to the human-computer interaction apparatus. The computing apparatus can allocate permissions to the human-computer interaction apparatus, enabling the human-computer interaction apparatus to control a portion of the applications of the computing apparatus or to fully control the computing apparatus. During the communication connection process between the computing apparatus and the human-computer interaction apparatus, the computing apparatus can operate in multiple threads and support the work thread of the human-computer interaction apparatus, and independently process other threads. The computing apparatus has priority in pausing or disconnecting the communication connection, that is, the computing apparatus can directly pause or disconnect the communication connection with the human-computer interaction apparatus, the human-computer interaction apparatus can send a request to pause or disconnect the communication connection with the computing apparatus, and the computing apparatus decides whether to approve or reject the request. Preferably, upon disconnection, the computing apparatus may decide whether the human-computer interaction apparatus saves data information generated during the connection operation process.

The method for implementing bidirectional communication between the human-computer interaction apparatus and the computing apparatus is applicable to communication modes such as one-to-one, one-to-many, many-to-one, and many-to-many.

The one-to-one communication mode refers to a mode in which a communication connection is directly established between one computing apparatus and one human-computer interaction apparatus. The computing apparatus is configured to allocate permissions to the human-computer interaction apparatus. The one-to-many communication mode is a mode in which a communication connection is established between one computing apparatus and a plurality of human-computer interaction apparatuses. The computing apparatus is configured to allocate permissions to each human-computer interaction apparatus separately or uniformly set the permissions for each human-computer interaction apparatus, and display the content on the computing apparatus in a split-screen manner. The many-to-one communication mode refers to a mode in which a communication connection is established between a plurality of computing apparatuses and one human-computer interaction apparatus. Each computing apparatus is configured to allocate permissions to the human-computer interaction apparatus separately, and display the content on the human-computer interaction apparatus in a split-screen manner. The human-computer interaction apparatus is configured to independently enlarge and control permitted applications of one of the computing apparatuses, and switch to control permitted applications of the other computing apparatus. The many-to-many communication mode refers to a mode in which a communication connection is established between a plurality of computing apparatuses and a plurality of human-computer interaction apparatuses. Each computing apparatus is configured to allocate permissions to each human-computer interaction apparatus separately, and display the content on the plurality of human-computer interaction apparatuses on split screens. Each human-computer interaction apparatus is configured to independently enlarge and control permitted applications of one of the computing apparatuses, and switch to control permitted applications of the other computing apparatus.

When it is necessary to pause or disconnect the connection:
In the one-to-one communication mode, the computing apparatus directly pauses or disconnects the connection, or the human-computer interaction apparatus requests to pause or disconnect, and the computing apparatus decides whether to approve the request.

In the one-to-many communication mode, the computing apparatus directly pauses or disconnects the connection with a portion of the human-computer interaction apparatuses, or directly pauses or disconnects the connections of all human-computer interaction apparatuses; or the human-computer interaction apparatus requests to pause or disconnect, and the computing apparatus decides whether to approve the request.

In the many-to-one communication mode, the computing apparatus directly pauses or disconnects the connection, or the human-computer interaction apparatus requests to pause or disconnect the connection with a portion or all of the computing apparatuses, and the corresponding computing apparatus decides whether to approve the request.

In the many-to-many communication mode, the computing apparatus directly pauses or disconnects the connection with a portion of the human-computer interaction apparatuses, or directly disconnects the connections with all human-computer interaction apparatuses; or a human-computer interaction apparatus requests to pause or disconnect the connection with a portion or all of the computing apparatuses, and the corresponding computing apparatus decides whether to approve the request.

The human-computer interaction apparatus and method capable of implementing bidirectional communication with a computing apparatus have various application scenarios, including business office work, home screen projection cinema, out-of-office work, online classes of students, and in-vehicle applications.

The technical solution of the present invention will be described in detail below with reference to the accompanying drawings and embodiments.

### Embodiment 1

Embodiment 1 of the present invention provides a human-computer interaction system with bidirectional communication. The system includes a human-computer interaction apparatus and a computing apparatus which are physically separated, wherein
the human-computer interaction apparatus is configured to receive and display applications to which permissions are allocated by the computing apparatus, operate the computing apparatus on the basis of the permissions, receive a human-computer interaction command, transmit the human-computer interaction command to the computing apparatus, and receive and display a processing result returned by the computing apparatus;
the computing apparatus is configured to allocate the permissions to the human-computer interaction apparatus, perform computational processing and software operations, and return the processing result to the human-computer interaction apparatus.

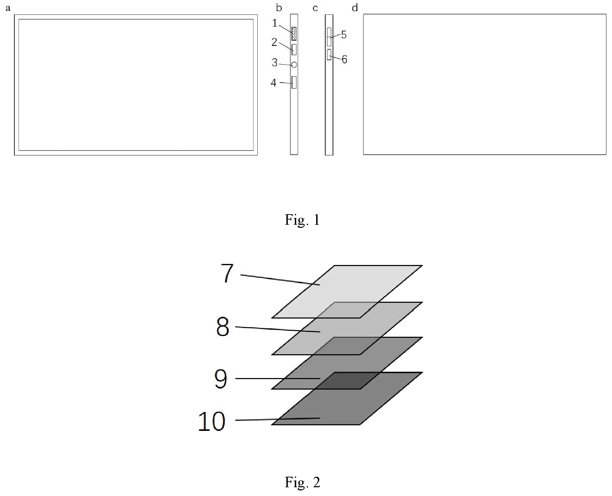

Referring to FIG. 1 which is a schematic diagram of the human-computer interaction apparatus according to the present application, a, b, c, and d of FIG. 1 are a front view, a left view, a right view, and a rear view of a high-speed bidirectional screen projection PAD, respectively. The exterior includes a sound outlet 1, a USB port for wired connection to a mobile phone 2, a headphone jack 3, a Type-C port 4, a volume adjustment button 5, and a power on/off button 6. According to this embodiment, other arrangements of the above outlet, ports, jack, or buttons can be obtained.

The human-computer interaction apparatus includes a communication module, a display module, and a human-computer interaction module.

The functions that can be executed by the communication module include but are not limited to wireless communication, wired communication, optical communication or other communication modes. The technical forms of wireless communication include, but are not limited to, WiFi, Bluetooth, Zigbee, NB-IoT, and LoRa.

The display technologies employed by the display module include, but are not limited to, liquid crystal display, OLED display, e-ink display, mini-LED display, micro-LED display, holographic imaging display, and full-band display.

The human-computer interaction technologies employed by the human-computer interaction module include, but are not limited to, resistive touch, capacitive touch, electromagnetic touch, infrared touch, surface acoustic wave touch, visual recognition, voice recognition, LiDAR, mouse, keyboard, touchpad, stylus input, 3D touch, and gravity sensing.

### Embodiment 2

Embodiment 2 of the present invention provides a human-computer interaction system with bidirectional communication. The system includes a human-computer interaction apparatus and a computing apparatus which are physically separated, wherein
the human-computer interaction apparatus is configured to receive and display applications to which permissions are allocated by the computing apparatus, operate the computing apparatus on the basis of the permissions, receive a human-computer interaction command, transmit the human-computer interaction command to the computing apparatus, and receive and display a processing result returned by the computing apparatus;
the computing apparatus is configured to allocate the permissions to the human-computer interaction apparatus, perform computational processing and software operations, and return the processing result to the human-computer interaction apparatus.

Referring to FIG. 2 which is a schematic diagram of a preferred nano silver wire touch display module of the human-computer interaction apparatus, the nano silver wire touch display module includes a backside frosted nano silver wire conductive film 7, OCA (Optically Clear Adhesive) 8, a nano silver wire conductive film 9, and a display module 10.

The nano silver wire ultra-thin touch screen is a coverless rigid-flexible touch screen. The surface of the touch screen is a frosted surface, which has the advantages of being scratch-resistant, fingerprint-resistant, and anti-reflective, and achieves a "paper-like" touch experience.

The coverless nano silver wire ultra-thin rigid-flexible touch screen is employed to eliminate the need for one layer of OCA and one layer of cover plate, thereby not only reducing costs, but also achieving weight reduction and thickness reduction of the high-speed bidirectional screen projection PAD.

### Embodiment 3

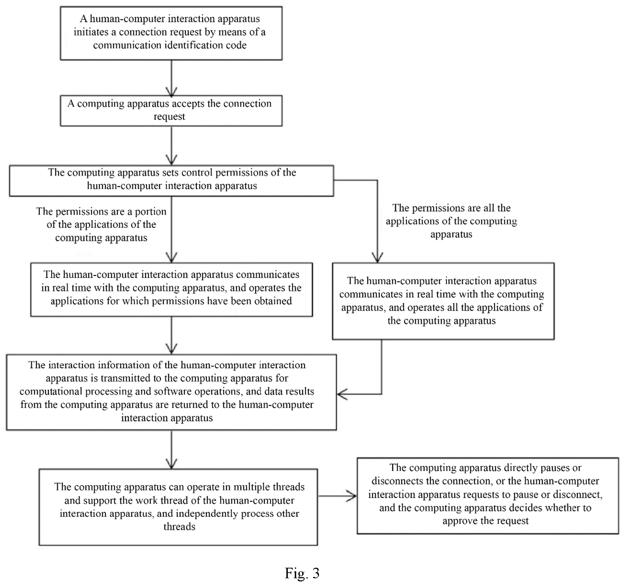

Embodiment 3 of the present invention provides a human-computer interaction method with bidirectional communication. Referring to FIG. 3, the method for implementing bidirectional communication between the human-computer interaction apparatus and the computing apparatus is one-to-one communication. The specific process is as follows:
the human-computer interaction apparatus initiates a connection request by means of a communication identification code, the computing apparatus accepts the connection request, and the human-computer interaction apparatus and the computing apparatus establish a communication connection by means of a communication protocol;
the computing apparatus allocates permissions to the human-computer interaction apparatus, wherein when the permissions are for a portion of the applications of the computing apparatus, the human-computer interaction apparatus communicates in real time with the computing apparatus, displays the applications to which permissions are allocated by the computing apparatus, and operates the applications for which permissions have been obtained; when the permissions are for all applications of the computing apparatus, the human-computer interaction apparatus communicates in real time with the computing apparatus, displays all applications of the computing apparatus, and operates all applications of the computing apparatus;
the interaction information of the human-computer interaction apparatus is transmitted to the computing apparatus for computational processing and software operations, and data results from the computing apparatus are returned to the human-computer interaction apparatus;
the computing apparatus can operate in multiple threads and support the work thread of the human-computer interaction apparatus, and independently process other threads;
when a pause or disconnection is required, the computing apparatus directly pauses or disconnects the connection, or the human-computer interaction apparatus requests to pause or disconnect, and the computing apparatus decides whether to approve the request.

The computing apparatus can set the priorities of applications permitted to be operated by the human-computer interaction apparatus.

### Embodiment 4

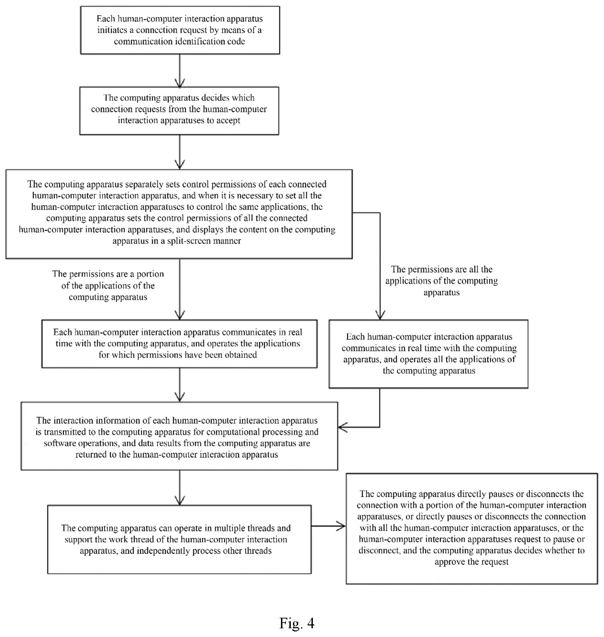

Embodiment 4 of the present invention provides a human-computer interaction method with bidirectional communication. Referring to FIG. 4, the method for implementing bidirectional communication between the human-computer interaction apparatuses and the computing apparatus is one-to-many communication. The specific process is as follows:
each human-computer interaction apparatus initiates a connection request by means of a communication identification code, the computing apparatus decides which connection requests from the human-computer interaction apparatuses to accept, and the plurality of human-computer interaction apparatuses and the computing apparatus establish communication connections through a communication protocol;
the computing apparatus separately allocates permissions to each connected human-computer interaction apparatus, and when it is necessary to set all the human-computer interaction apparatuses to control the same applications, the computing apparatus allocates the permissions to all the connected human-computer interaction apparatuses, and displays the content on the computing apparatus in a split-screen manner;
when the permissions are for a portion of the applications of the computing apparatus, each human-computer interaction apparatus communicates in real time with the computing apparatus, displays the applications to which permissions are allocated by the computing apparatus, and operates the applications for which permissions have been obtained; when the permissions are for all applications of the computing apparatus, each human-computer interaction apparatus communicates in real time with the computing apparatus, displays all applications of the computing apparatus, and operates all applications of the computing apparatus;
the interaction information of each human-computer interaction apparatus is transmitted to the computing apparatus for computational processing and software operations, and data results from the computing apparatus are returned to each human-computer interaction apparatus;
the computing apparatus can operate in multiple threads and support the work thread of each human-computer interaction apparatus, and independently process other threads;
when a pause or disconnection is required, the computing apparatus directly pauses or disconnects the connection with a portion of the human-computer interaction apparatuses, or directly pauses or disconnects the connection with all the human-computer interaction apparatuses, or the human-computer interaction apparatuses request to pause or disconnect, and the computing apparatus decides whether to approve the request.

The computing apparatus can set the priorities of the human-computer interaction apparatuses and the priorities of applications permitted to be operated.

### Embodiment 5

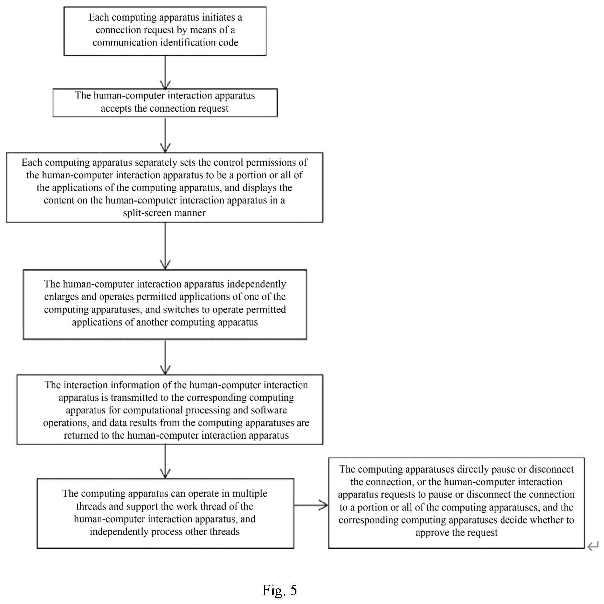

Embodiment 5 of the present invention provides a human-computer interaction method with bidirectional communication. Referring to FIG. 5, the method for implementing bidirectional communication between the human-computer interaction apparatus and the computing apparatuses is many-to-one communication. The specific process is as follows:
each computing apparatus initiates a connection request by means of a communication identification code, the human-computer interaction apparatus accepts the connection request, and the human-computer interaction apparatus establishes a communication connection with each computing apparatus through a communication protocol;
each computing apparatus separately allocates to the human-computer interaction apparatus permissions for a portion or all of the applications of the computing apparatus, and displays the content on the human-computer interaction apparatus in a split-screen manner;
the human-computer interaction apparatus independently enlarges and controls permitted applications of one of the computing apparatuses, and switches to operate permitted applications of another computing apparatus;
the interaction information of the human-computer interaction apparatus is transmitted to the corresponding computing apparatus for computational processing and software operations, and data results from the computing apparatuses are returned to the human-computer interaction apparatus;
the computing apparatuses can operate in multiple threads and support the work thread of the human-computer interaction apparatus, and independently process other threads;
when a pause or disconnection is required, the computing apparatuses directly pause or disconnect the connection, or the human-computer interaction apparatus requests to pause or disconnect the connection to a portion or all of the computing apparatuses, and the corresponding computing apparatuses decide whether to approve the request.

The computing apparatuses can set the priorities of the computing apparatuses that the human-computer interaction apparatus operates and the priorities of applications permitted to be operated.

### Embodiment 6

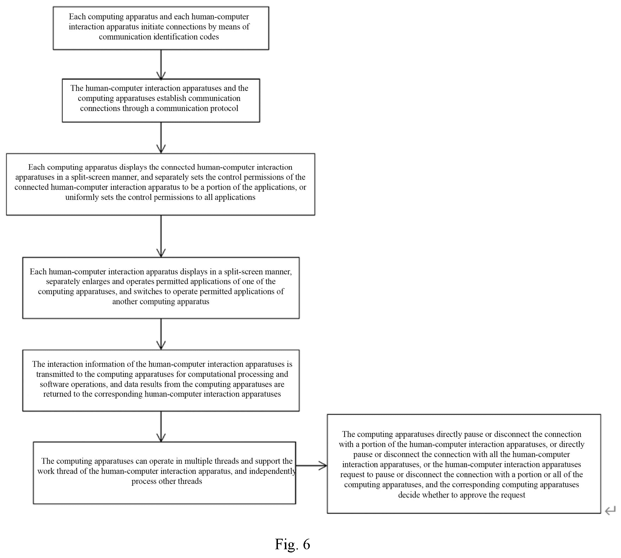

Embodiment 6 of the present invention provides a human-computer interaction method with bidirectional communication. Referring to FIG. 6, the method for implementing bidirectional communication between the human-computer interaction apparatuses and computing apparatuses is many-to-many communication. The specific process is as follows:
each computing apparatus and each human-computer interaction apparatus initiate connections by means of communication identification codes, and the human-computer interaction apparatuses and the computing apparatuses establish communication connections through a communication protocol;
each computing apparatus displays the connected human-computer interaction apparatuses in a split-screen manner, and separately allocates to each connected human-computer interaction apparatus permissions for a portion of the applications or uniformly sets the permissions to all applications;
each human-computer interaction apparatus displays in a split-screen manner, separately enlarges and operates permitted applications of one of the computing apparatuses, and switches to operate permitted applications of another computing apparatus;
the interaction information of the human-computer interaction apparatuses is transmitted to the corresponding computing apparatuses for computational processing and software operations, and data results from the computing apparatuses are returned to the corresponding human-computer interaction apparatuses;
the computing apparatuses can operate in multiple threads and support the work thread of the human-computer interaction apparatus, and independently process other threads;
when a pause or disconnection is required, the computing apparatuses directly pause or disconnect the connection with a portion of the human-computer interaction apparatuses, or directly disconnect the connection with all the human-computer interaction apparatuses, or the human-computer interaction apparatuses request to pause or disconnect the connection with a portion or all of the computing apparatuses, and the corresponding computing apparatuses decide whether to approve the request.

The computing apparatuses can set the priorities of the human-computer interaction apparatuses, the priorities of the computing apparatuses operated by the human-computer interaction apparatuses, and the priorities of the applications permitted to be operated.

Finally, it should be noted that the above embodiments are merely used to illustrate the technical solutions of the present invention and are not limiting. Although the present invention has been described in detail with reference to the embodiments, those skilled in the art should understand that modifications or equivalent substitutions made to the technical solution of the present invention do not depart from the spirit and scope of the technical solution of the present invention, and should all be included within the scope of the claims of the present invention.

## Claims

1. A human-computer interaction system with bidirectional communication, **characterized in that** the system comprises a human-computer interaction apparatus and a computing apparatus which are physically separated, wherein
the human-computer interaction apparatus is configured to receive and display applications to which permissions are allocated by the computing apparatus, operate the computing apparatus on the basis of the permissions, receive a human-computer interaction command, transmit the human-computer interaction command to the computing apparatus, and receive and display a processing result returned by the computing apparatus;
the computing apparatus is configured to allocate the permissions to the human-computer interaction apparatus, perform computational processing and software operations, and return the processing result to the human-computer interaction apparatus;
and combination forms of the system comprise one human-computer interaction apparatus and one computing apparatus, a plurality of human-computer interaction apparatuses and one computing apparatus, one human-computer interaction apparatus and a plurality of computing apparatuses, or a plurality of human-computer interaction apparatuses and a plurality of computing apparatuses.

2. The human-computer interaction system with bidirectional communication according to claim 1, **characterized in that** the human-computer interaction apparatus comprises a communication module, a display module, and a human-computer interaction module, wherein
the communication module is configured to perform bidirectional communication with the computing apparatus, receive the permissions allocated by the computing apparatus and transmit the permissions to the display module, send commands and/or requests to the computing apparatus, receive the processing result returned by the computing apparatus, and transmit the processing result to the display module;
the display module is configured to display the applications to which permissions are allocated by the computing apparatus, and is further configured to display the returned processing result; and
the human-computer interaction module is configured to receive the human-computer interaction command using a human-computer interaction technology.

3. The human-computer interaction system with bidirectional communication according to claim 2, **characterized in that** the human-computer interaction technology comprises one or more of resistive touch, capacitive touch, electromagnetic touch, infrared touch, surface acoustic wave touch, visual recognition, voice recognition, LiDAR, mouse, keyboard, touchpad, stylus input, 3D touch, and gravity sensing.

4. The human-computer interaction system with bidirectional communication according to claim 2, **characterized in that** the technology employed by the display module comprises one or more of liquid crystal display, OLED display, e-ink display, mini-LED display, micro-LED display, holographic imaging display, and full-band display.

5. The human-computer interaction system with bidirectional communication according to claim 2, **characterized in that** the requests sent by the communication module of the human-computer interaction apparatus to the computing apparatus comprise: a communication connection request, and a request to pause or disconnect a connection with the computing apparatus.

6. The human-computer interaction system with bidirectional communication according to claim 1, **characterized in that** the computing apparatus employs a multi-threaded parallel working mode, and the computing apparatus comprises: a communication module, a processing module, and a permission control module; wherein
the communication module is configured to perform bidirectional communication with the human-computer interaction apparatus, transmit open applications to the human-computer interaction apparatus, receive commands and/or requests from the human-computer interaction apparatus, and return a processing result to the human-computer interaction apparatus;
the processing module is configured to perform computational processing and software operations according to instructions of the human-computer interaction apparatus, and transmit the processing result to the communication module; and
the permission control module is configured to allocate the permissions to the human-computer interaction apparatus, wherein the permissions comprise opening access to partial applications and all applications.

7. The human-computer interaction system with bidirectional communication according to claim 6, **characterized in that** the communication module of the computing apparatus is further configured to pause or disconnect a communication connection with the human-computer interaction apparatus, and is further configured to receive a request sent by the human-computer interaction apparatus to pause or disconnect a connection with the computing apparatus, and decide whether to approve the request.

8. The human-computer interaction system with bidirectional communication according to claim 1, **characterized in that** a communication mode between the human-computer interaction apparatus and the computing apparatus is a wired or wireless mode, and the wireless mode comprises one or more of WiFi, Bluetooth, Zigbee, NB-IoT, and LoRa.

9. A human-computer interaction method with bidirectional communication, implemented by the system according to any one of claims 1 to 8, wherein
when the system comprises one human-computer interaction apparatus and one computing apparatus, the method comprises:
initiating, by the human-computer interaction apparatus, a connection request to the computing apparatus by means of a communication identification code;
accepting, by the computing apparatus, the connection request and establishing a connection;
allocating, by the computing apparatus, permissions to the human-computer interaction apparatus;
displaying, by the human-computer interaction apparatus, applications to which permissions are allocated by the computing apparatus;
operating, by the human-computer interaction apparatus, the computing apparatus on the basis of the permissions, receiving a human-computer interaction command and/or request, and transmitting the human-computer interaction command and/or request to the computing apparatus;
performing, by the computing apparatus, computational processing and software operations, and returning the processing result to the human-computer interaction apparatus; and
displaying, by the human-computer interaction apparatus, the processing result;
when the system comprises a plurality of human-computer interaction apparatuses and one computing apparatus, the method comprises:
initiating, by the plurality of human-computer interaction apparatuses, connection requests to the computing apparatus respectively by means of communication identification codes;
determining, by the computing apparatus, the human-computer interaction apparatuses to be admitted for connection, and establishing connections respectively;
allocating, by the computing apparatus, permissions to each connected human-computer interaction apparatus;
displaying, by each connected human-computer interaction apparatus, an application to which permissions are allocated by the computing apparatus;
operating, by each connected human-computer interaction apparatus, the computing apparatus according to respective permissions of the human-computer interaction apparatus, receiving human-computer interaction commands and/or requests respectively, and transmitting the commands and/or requests to the computing apparatus;
performing, by the computing apparatus, computational processing and software operations, and returning the processing result to the corresponding connected human-computer interaction apparatuses; and
displaying, by the human-computer interaction apparatus, the processing result;
when the system comprises one human-computer interaction apparatus and a plurality of computing apparatuses, the method comprises:
initiating, by the plurality of computing apparatuses, connection requests to the human-computer interaction apparatus respectively by means of communication identification codes;
accepting, by the human-computer interaction apparatus, the connection requests and establishing connections;
allocating, by each connected computing apparatus, permissions to the human-computer interaction apparatus;
displaying, by the human-computer interaction apparatus, applications to which permissions are allocated by different computing apparatuses in a split-screen manner;
operating, by the human-computer interaction apparatus, the computing apparatuses according to the permissions, and transmitting human-computer interaction commands and/or requests to corresponding computing apparatuses;
performing, by each connected computing apparatus, computational processing and software operations, and returning a processing result to the human-computer interaction apparatus; and
displaying, by the human-computer interaction apparatus, the processing results of different computing apparatuses in a split-screen manner;
when the system comprises a plurality of human-computer interaction apparatuses and a plurality of computing apparatuses, the method comprises:
initiating, by the plurality of human-computer interaction apparatuses, connection requests to the plurality of computing apparatuses respectively by means of communication identification codes;
accepting, by each computing apparatus, corresponding connection requests and establishing connections;
allocating, by each computing apparatus, permissions to the connected human-computer interaction apparatuses;
displaying, by each connected human-computer interaction apparatus, applications to which permissions are allocated by different computing apparatuses in a split-screen manner;
operating, by each connected human-computer interaction apparatus, the computing apparatuses according to the permissions, and transmitting human-computer interaction commands and/or requests to the corresponding computing apparatuses;
performing, by each computing apparatus, computational processing and software operations, and returning processing results to the connected human-computer interaction apparatus; and
displaying, by each connected human-computer interaction apparatus, the processing results from different computing apparatuses in a split-screen manner.

10. The human-computer interaction method with bidirectional communication according to claim 9, **characterized in that** the method further comprises:
directly pausing or disconnecting, by the computing apparatus, a connection with the human-computer interaction apparatus; or
receiving, by the computing apparatus, a pausing or disconnection request sent by the human-computer interaction apparatus, and deciding whether to approve the request.
